Europäisches Patentamt

European Patent Office

Office européen des brevets

(19)

(11) Numéro de publication : **0 511 059 B1**

(12) **FASCICULE DE BREVET EUROPEEN**

(45) Date de publication du fascicule du brevet :
**09.11.94 Bulletin 94/45**

(51) Int. Cl.$^5$ : **H01S 3/09**

(21) Numéro de dépôt : **92401082.0**

(22) Date de dépôt : **17.04.92**

(54) **Procédé et dispositif de réglage du champ magnétique transverse dans un onduleur pour génération d'énergie lumineuse à partir d'un faisceau d'électrons.**

(30) Priorité : **25.04.91 FR 9105109**

(43) Date de publication de la demande :
**28.10.92 Bulletin 92/44**

(45) Mention de la délivrance du brevet :
**09.11.94 Bulletin 94/45**

(84) Etats contractants désignés :
**DE FR GB IT NL**

(56) Documents cités :
**US-A- 3 822 410**
**US-A- 4 542 510**

(73) Titulaire : **THOMSON-CSF**
**173, Boulevard Haussmann**
**F-75008 Paris (FR)**

(72) Inventeur : **Leboutet, Hubert**
**THOMSON-CSF,**
**SCPI B.P. 329**
**F-92402 COURBEVOIE CEDEX (FR)**
Inventeur : **Simon, Michel**
**THOMSON-CSF,**
**SCPI B.P. 329**
**F-92402 COURBEVOIE CEDEX (FR)**

(74) Mandataire : **Beylot, Jacques et al**
**Thomson-CSF**
**SCPI**
**B.P. 329**
**F-92402 COURBEVOIE CEDEX (FR)**

EP 0 511 059 B1

## Description

L'invention concerne des dispositifs appelés onduleurs, qui permettent, dans les Lasers à Electron Libre (LEL), la conversion directe d'une partie de l'énergie d'un faisceau d'électrons relativistes en énergie lumineuse.

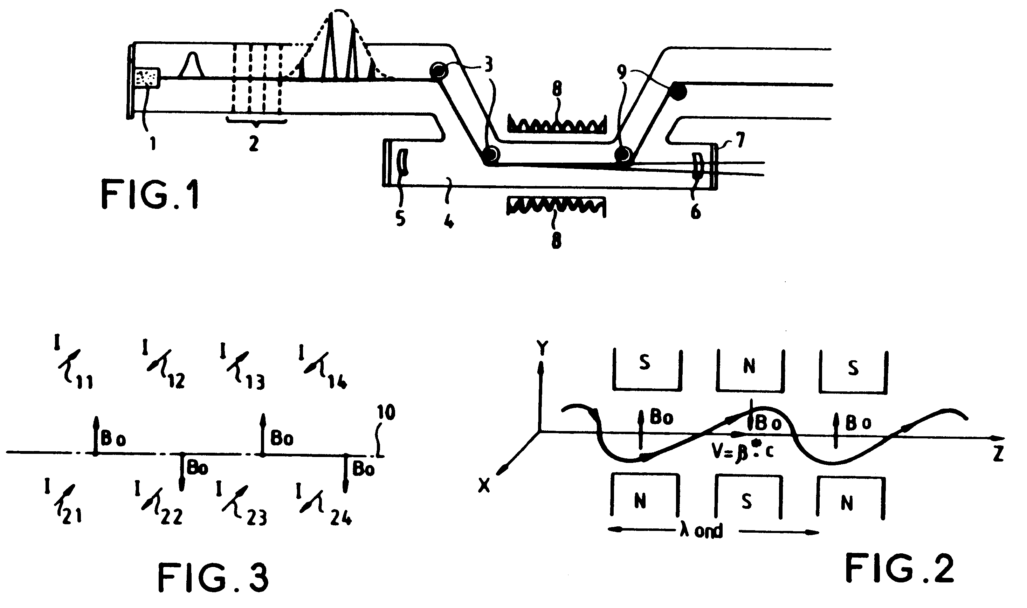

Un Laser à Electron Libre est constitué, comme représenté à la figure 1, par :

- une source d'électrons à haute énergie qui est formée d'un canon à électrons 1 suivi d'un accélérateur linéaire 2 radiofréquence ou à induction et qui émet des bouffées d'électrons accélérés, regroupées par paquets de quelques milliers, une bouffée ayant la durée d'une microimpulsion de quelques dizaines de picosecondes et un paquet la durée d'une macroimpulsion de quelques dizaines de microsecondes ;
- un premier système de déviation magnétique 3 permettant d'infléchir la trajectoire des électrons accélérés vers une cavité optique accordée 4 de Laser ;
- ladite cavité optique accordée 4 de Laser avec ses miroirs 5 et 6, et sa fenêtre optique 7 de sortie des ondes lumineuses ;
- un onduleur 8 qui est disposé dans la partie médiane de la cavité optique 4 sur le parcours du faisceau d'électrons accélérés et qui engendre un champ magnétique transverse alternativement polarisé Nord-Sud, Sud-Nord le long de la direction de propagation du faisceau d'électrons et
- un deuxième système de déviation magnétique 9 permettant d'infléchir la trajectoire du faisceau d'électrons après son passage dans la cavité optique 4 pour qu'il s'en échappe latéralement par rapport à la fenêtre optique 7 de sortie des ondes lumineuses.

Le principe de fonctionnement du Laser à Electron Libre est basé sur le rayonnement de freinage qui résulte du fait que tout électron subissant une accélération ou une décélération rayonne de l'énergie électromagnétique et sur le raccourcissement relativiste de la longueur d'onde.

Dans l'onduleur, les électrons traversant un champ magnétique transverse alternativement polarisé subis sent, comme représenté à la figure 2, des déflexions de petites amplitudes, tantôt dans un sens, tantôt dans l'autre, et rayonnent de l'énergie lumineuse dans la direction de propagation du faisceau. Dans des conditions proches du synchronisme entre l'oscillation forcée des électrons et l'onde lumineuse, il y a échange d'énergie des électrons à l'onde lumineuse et déclenchement d'un phénomène Laser dans la cavité optique.

La longueur d'onde de l'émission lumineuse peut s'écrire :

$$\lambda = \frac{\lambda \, \text{ond}}{2\gamma^2} \left(1 + \frac{K^2}{2}\right)$$

$\lambda$ ond est le pas magnétique ou pas de l'onduleur
$\gamma$ est égal à :

$$\gamma = \frac{1}{\sqrt{1 - \left(\dfrac{v}{c}\right)^2}}$$

v étant la vitesse des électrons et c la vitesse de la lumière
K est égal à :

$$K = 0,94 \, \lambda \, \text{ond} \, Bo$$

Bo étant la valeur de l'induction magnétique produite par l'onduleur.

On remarque que la longueur d'onde de l'émission lumineuse est d'autant plus courte que le pas magnétique de l'onduleur $\lambda$ ond est petit.

Des onduleurs utilisant ce principe physique ont déjà fait l'objet de diverses réalisations.

Ils mettent en oeuvre des circuits magnétiques qui ont soit une structure à aimants permanents, électromagnétiques ou hybrides, soit une structure sans aimant avec un conducteur électrique qui décrit des méandres sur le parcours du faisceau d'électrons et qui est parcouru par un fort courant d'excitation (voir p. ex. US-A- 4 542 510).

La présente invention est relative, plus particulièrement, aux onduleurs dont le champ magnétique transverse est engendré, en totalité ou en partie, par un courant d'excitation circulant dans un conducteur formant des bobinages ou des méandres le long du trajet du faisceau d'électrons dans la cavité optique d'un laser à électron libre.

Elle a pour but d'améliorer l'interaction électrons-énergie lumineuse rayonnée au sein de l'onduleur.

Elle a pour objet un procédé de réglage du champ magnétique transverse dans un onduleur pour la génération d'énergie lumineuse à partir d'un faisceau d'électrons émis en paquets isolés ayant la durée d'une macroimpulsion, l'onduleur comportant un conducteur formant le long du trajet du faisceau d'électrons, des bobinages ou des méandres induisant en tout ou partie un champ magnétique transverse alternativement polarisé Nord-Sud et Sud-Nord. Ce procédé consiste :

- à prévoir sur le conducteur induisant le champ magnétique transverse, des prises auxiliaires de dérivation de courant réparties le long du trajet du faisceau d'électrons dans l'onduleur ;
- à injecter un courant principal d'excitation dans la totalité du conducteur induisant le champ magnétique transverse pendant la durée d'une macroimpulsion correspondant au temps de passage dans l'onduleur d'un paquet d'électrons et
- à injecter, par les prises auxiliaires de dérivation au début de chaque macroimpulsion, des courants auxiliaires partiels qui s'ajoutent au courant principal d'excitation dans les parties du conducteur induisant le champ magnétique transverse dans des zones du trajet du faisceau d'électrons dans l'onduleur situées en amont desdites prises auxiliaires par rapport au sens de circulation du faisceau.

De manière préférentielle, les courants auxiliaires partiels injectés par les prises auxiliaires ont des intensités qui sont constantes sur une durée de une à deux microsecondes puis décroissent jusqu'à s'annuler en une ou deux microsecondes.

L'invention a également pour objet un onduleur pour la mise en oeuvre du procédé précité.

D'autres caractéristiques et avantages de l'invention ressortiront ci-après de divers modes de réalisation donnés à titre d'exemple. Cette description sera faite en regard du dessin dans lequel :

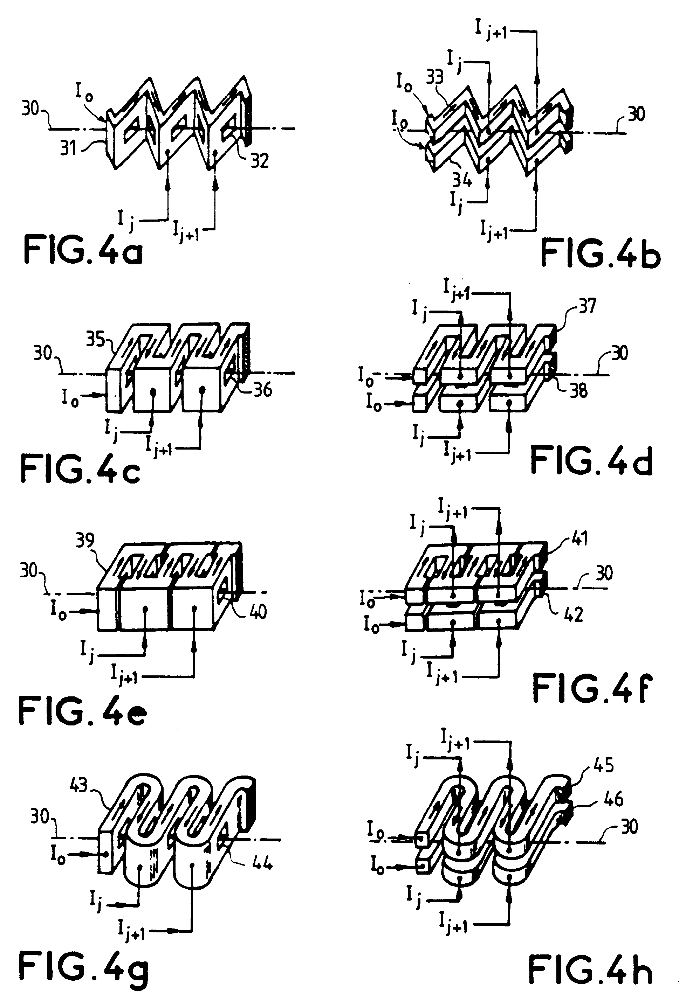

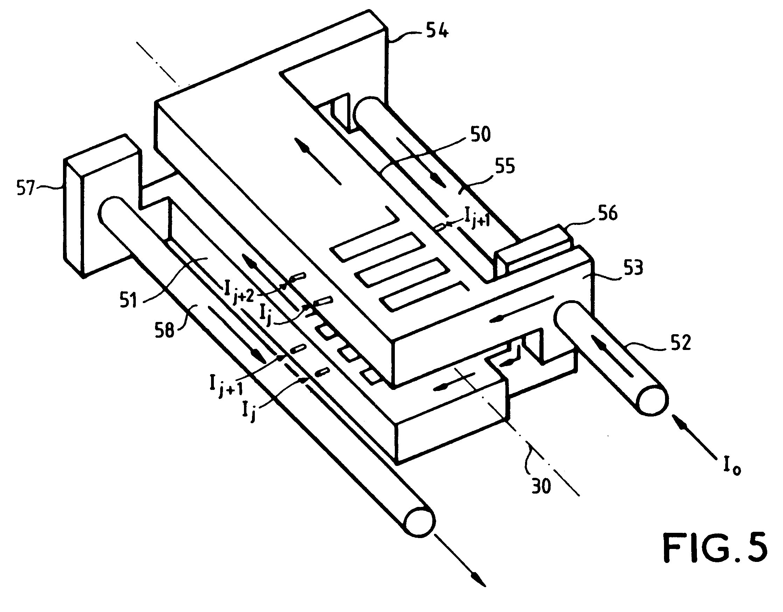

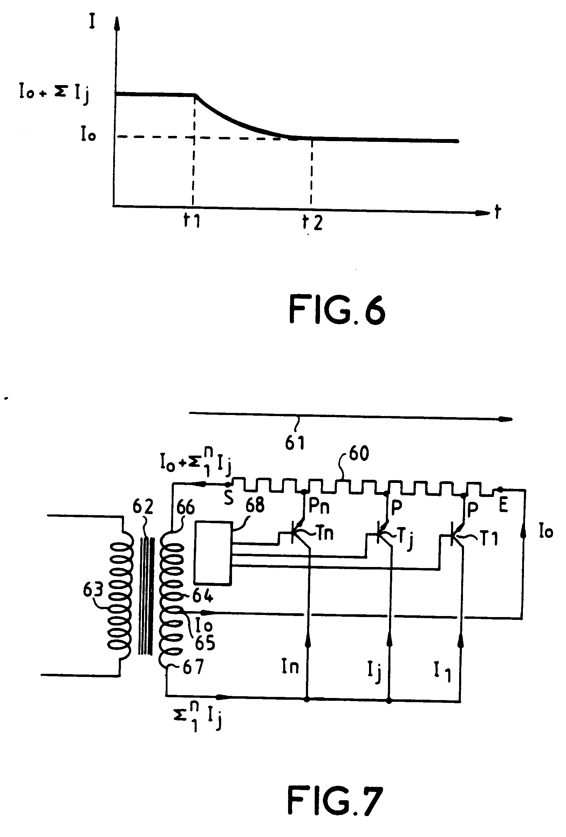

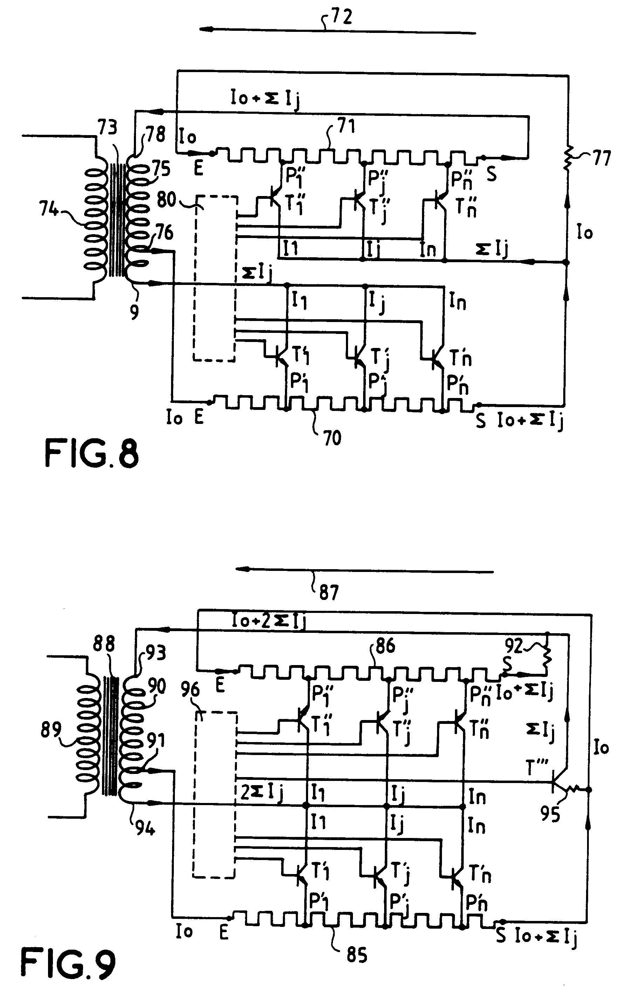

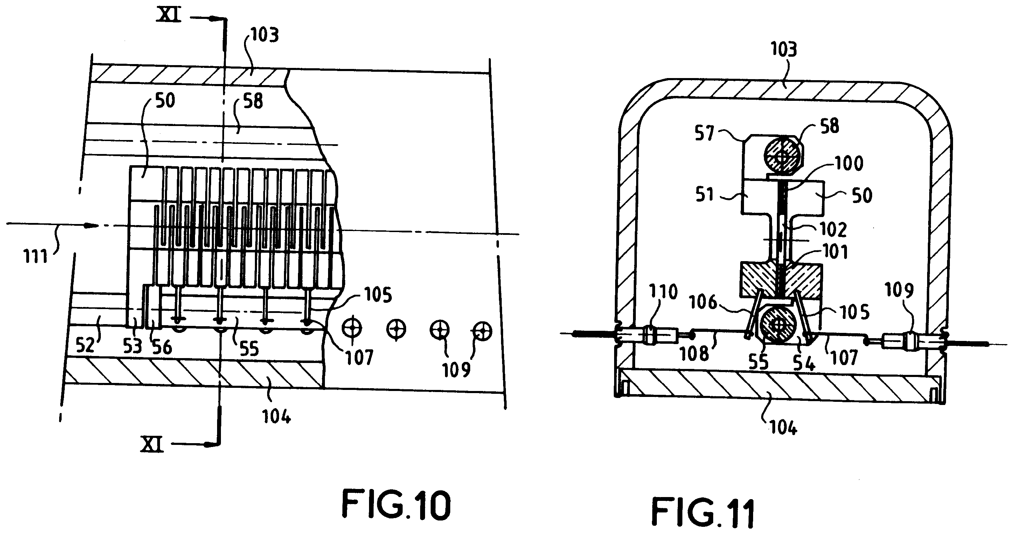

- une figure 1 précitée représente un schéma de principe d'un Laser à Electron Libre ;
- une figure 2 précitée illustre les ondulations de trajectoire provoquées sur un faisceau d'électrons par un champ magnétique transverse polarisé alternativement Nord-Sud et Sud-Nord ;
- une figure 3 représente, de manière très schématique, une façon d'engendrer selon un axe un champ magnétique transverse polarisé alternativement Nord-Sud et Sud-Nord au moyen d'une superposition de deux nappes identiques de courants transverses d'excitation de sens alternés ;
- des figures 4a,, 4b, 4c, 4d, 4e, 4f, 4g, et 4h représentent en perspective différentes formes possibles pour un conducteur électrique à méandres de circuit de magnétisation d'un onduleur ;
- une figure 5 représente, en perspective, de manière schématique, l'assemblage électrique d'un conducteur électrique à méandres en deux parties superposées disposées l'une au-dessus et l'autre au-dessous du parcours du faisceau d'électrons dans la cavité optique du Laser ;
- une figure 6 représente la forme de la loi de variation en fonction du temps du courant d'excitation d'un circuit de magnétisation d'onduleur selon l'invention ;
- une figure 7 représente un schéma d'un circuit électrique d'excitation d'un onduleur ayant un circuit de magnétisation constitué d'un conducteur à méandres en une seule partie ;
- des figures 8 et 9 représentent des schémas de circuits électriques d'excitation d'un onduleur ayant un circuit de magnétisation constitué d'un conducteur à méandres en deux parties superposées ;
- une figure 10 représente une coupe longitudinale partielle d'un onduleur selon l'invention et
- une figure 11 représente une coupe en section droite selon une ligne XI, XI de l'onduleur représenté à la figure précédente.

Dans le dessin, les mêmes éléments ont été indexés sur les différentes figures par les mêmes références.

Comme le montre la figure 3, on peut obtenir un champ magnétique transverse polarisé alternativement Nord-Sud et Sud-Nord, le long d'une direction 10 représentant le parcours d'un faisceau d'électrons, en disposant au-dessus et au-dessous de cette direction deux nappes identiques de courants 11, 12, 13, 14 et 21, 22, 23, 24 de direction transverse et de sens alternés. Ces deux nappes de courants peuvent être obtenues au moyen d'un conducteur électrique décrivant des méandres de part et d'autre du parcours du faisceau d'électrons dans la cavité optique. Ce conducteur électrique qui constitue alors le circuit de magnétisation de l'onduleur peut prendre diverses formes. Il peut être en une seule partie comme représenté en 31, 35, 39, 43 aux figures 4a, 4c, 4e, et 4g. Il est alors percé longitudinalement de trous 32, 36, 40, 44 alignés selon l'axe 30 du trajet du faisceau d'électrons. Il peut également être en deux parties de même forme, superposées, avec un espace intercalaire dans lequel passe le faisceau d'électrons transitant dans la cavité optique comme montré en 33, 34 ; 37, 38 ; 41, 42 ; 45, 46 sur les figures 4b, 4d, 4f et 4h. il décrit des méandres qui peuvent être soit à contour triangulaire comme représenté en 31, 33, 34 aux figures 4a et 4b, soit à contour rectangulaire en U comme représenté en 35, 37, 38 aux figures 4e et 4d ou en Π comme représenté en 39, 41, 42 aux figures 4e et 4f, soit à contour arrondi comme représenté en 43, 45, 46 aux figures 4g et 4h.

Lorsque le conducteur électrique du circuit de magnétisation de l'onduleur est en deux parties superposées disposées l'une au-dessus et l'autre au-dessous du parcours du faisceau d'électrons dans la cavité optique, les liaisons électriques entre ces deux parties sont organisées de manière à faire circuler le même courant d'excitation dans le même sens dans chacune d'entre elles.

Un exemple en est donné à la figure 5 où on distingue les deux parties 50, 51 représentées de manière schématique, d'un conducteur à méandres de circuit de magnétisation. L'arrivée du courant d'excitation se fait par une barre conductrice 52 fixée à une patte latérale conductrice 53 formant une première extrémité de la partie 50 du conducteur à méandres disposée dans l'axe et au-dessus du parcours 30 du faisceau d'électrons. Le courant d'excitation parcourt cette partie 50 et en sort par sa deuxième extrémité qui forme une patte latérale conductrice 54 disposée du même côté. Cette patte latérale 54 est fixée à une barre conductrice 55 d'interconnexion entre les deux parties 50 et 51 du conducteur à méandres qui revient en direction de la première extrémité de la partie 50 et rencontre, avant la patte latérale 53 de cette dernière, une autre patte latérale 56 formant une première extrémité de la partie 51 du conducteur à méandres disposée dans l'axe au-dessous du parcours 30 du faisceau d'électrons. Le courant d'excitation revient par la barre conductrice d'interconnexion 55 en direction de la première extrémité de la partie 51 du conducteur à méandres puis parcourt cette partie 51 dans le même sens que la partie 50 et en sort par une deuxième extrémité qui forme une patte latérale conductrice 57 dépassant du côté opposé aux autres pattes latérales 53, 54, 56 et qui est raccordée à une barre conductrice 58 de départ du courant longeant les deux parties 50 et 51 du conducteur à méandres.

Dans le faisceau d'électrons qui traverse l'onduleur dans la cavité optique du laser à électron libre, les électrons qui proviennent drun accélérateur linéaire radiofréquence se propagent par bouffées qui correspondent à des microimpulsions de quelques dizaines de picosecondes et qui sont regroupées par quelques milliers en paquets isolés correspondant à des macroimpulsions de quelques dizaines de microsecondes à quelques secondes.

Pour le déclenchement d'un phénomène Laser il faut établir un champ magnétique transverse dans l'onduleur au passage de chaque paquet de bouffées d'électrons ce qui peut se faire en fournissant au circuit magnétique de l'onduleur un courant impulsionnel de quelques dizaines de kiloampères maintenu sur une durée légèrement supérieure à celle d'une macroimpulsion. Cependant, le fonctionnement de l'interaction électrons-énergie lumineuse rayonnée au sein de l'onduleur placé dans la cavité optique du Laser peut être amélioré en faisant varier la valeur du champ magnétique transverse de l'onduleur au cours d'une macroimpulsion à la fois en fonction du temps et de la position le long du trajet du faisceau d'électrons dans la cavité optique de manière que, pendant la montée en puissance de l'interaction électrons-énergie rayonnée consécutive à l'arrivée d'un paquet de bouffées d'électrons dans l'onduleur, la loi de variation de la vitesse synchrone le long de l'onduleur soit, à chaque instant, la loi optimale correspondant au niveau instantané du champ électrique haute fréquence. En effet, pour optimiser le rendement de l'interaction électrons-énergie lumineuse rayonnée, il est nécessaire de moduler le champ magnétique transverse dans l'onduleur en fonction des caractéristiques évolutives du champ électrique haute fréquence qui augmente au fur et à mesure du déroulement d'une macroimpulsion en raison de l'énergie apportée dans la cavité optique par chaque bouffée d'électrons.

Pour permettre l'ajustement de la valeur du champ magnétique transverse à la fois en fonction du temps et de la position le long du trajet du faisceau d'électrons dans l'onduleur, on prévoit, comme représenté aux figures 4a, 4b, 4c, 4d, 4e, 4f, 4g et 5, de munir le conducteur à méandres engendrant le champ magnétique transverse, de prises auxiliaires de dérivation réparties le long du trajet du faisceau d'électrons dans l'onduleur et repérées avec une numérotation croissante j, j+1, dans le sens inverse de déplacement des électrons du faisceau.

Dans la pratique, on injecte par les prises auxiliaires de dérivation, sur une durée inférieure à une ou deux microsecondes au début de chaque macroimpulsion, des courants auxiliaires $I_j$, $I_j+1$ qui s'ajoutent au courant principal $I_o$ dans les parties du conducteur induisant le champ magnétique transverse situées relativement à ces prises, en amont par rapport au sens de déplacement des électrons du faisceau. Puis on fait décroître ces courants auxiliaires jusqu'à leur annulation sur une durée ultérieure également inférieure à une ou deux microsecondes tout en maintenant constante l'intensité du courant principal d'excitation sur toute la durée d'une macroimpulsion. Les intensités initiales des courants auxiliaires $I_j$ et $I_{j+1}$ ainsi que leurs lois de décroissance au cours de chaque macroimpulsion sont ajustées expérimentalement de manière à optimiser le rendement en énergie lumineuse.

La loi de variation, en fonction du temps, du courant d'excitation en un point en amont des prises auxiliaires de dérivation sur le conducteur induisant le champ magnétique transverse de l'onduleur est représentée à la figure 6. Un courant de valeur maximale $I_o + \Sigma I_j$ ($\Sigma I_j$ étant la somme des courants partiels injectés par les prises auxiliaires de dérivation placées en aval du point considéré) circule pendant un temps $t_1$ inférieur à une ou deux microsecondes au début d'une macroimpulsion correspondant à l'arrivée dans l'onduleur d'un paquet de bouffées d'électrons. Le courant circulant suit ensuite une loi de décroissance pendant une durée $t_2-t_1$ inférieure à une ou deux microsecondes, puis reste constant à la valeur $I_o$ jusqu'à la fin de la macroimpulsion.

La figure 7 donne un exemple de circuit électrique d'alimentation en courant d'un onduleur ayant un circuit de magnétisation constitué d'un conducteur à méandres 60 en une seule partie tel que ceux représentés aux figures 4a, 4c, 4e ou 4g. Le faisceau d'électrons circule le long du conducteur à méandres 60 à l'intérieur d'une série de trous percés longitudinalement depuis l'extrémité S jusqu'à l'extrémité E en suivant le sens de la flèche 61. Le conducteur à méandres 60 est pourvu de prises auxiliaires de dérivation de courant $P_1$..., $P_j$... , $P_n$ échelonnées sur sa longueur et alimenté en courant par l'intermédiaire d'un transformateur d'impulsions 62. Le transformateur d'impulsions 62 comporte un enroulement primaire 63 et un enroulement secondaire 64 à prise intermédiaire 65. Le conducteur à méandres 60 est connecté par son extrémité S à une borne d'extrémité 66 de l'enroulement secondaire 64 et par son extrémité E à la prise intermédiaire 65. L'autre borne d'extrémité 67 de l'enroulement secondaire 64 du transformateur d'impulsions 62 est connectée par l'intermédiaire des jonctions collecteur-émetteur de transistors commutateurs de courant $T_1$..., $T_j$..., $T_n$ aux prises auxiliaires de dérivation $P_1$..., $P_j$..., $P_n$ du conducteur à méandres 60. Les bases des transistors commutateurs de courant $T_1$..., $T_j$..., $T_n$ sont connectées à un circuit de commande 68.

En cours de fonctionnement, le transformateur d'impulsions 62 reçoit sur son enroulement primaire 63 des impulsions d'excitation qui recouvrent chacune, avec une durée légèrement supérieure, une macroimpulsion coincidant à l'arrivée dans l'onduleur d'un paquet de bouffées d'électrons. Chaque impulsion d'excitation provoque l'apparition, sur la prise intermédiaire 65 de l'enroulement secondaire 64 du transformateur d'impulsions 62, d'un courant principal $I_0$, d'une intensité de quelques kiloampères à quelques dizaines de kiloampères qui circule sur toute la longueur du conducteur à méandres. Elle provoque en outre, pendant un temps $t_1$ inférieur à une ou deux microsecondes où les transistors commutateurs de courant $T_1$..., $T_j$..., $T_n$ sont rendus conducteurs par le circuit de commande 68, l'apparition de courants auxiliaires partiels $I_1$..., $I_j$..., $I_n$ sur la borne d'extrémité 67 du secondaire 64 qui sont injectés dans le conducteur à méandres 60 au niveau de ses différentes prises auxiliaires de dérivation $P_1$..., $P_j$..., $P_n$ et qui ressortent par l'extrémité S de celui-ci située en amont par rapport au sens de déplacement du faisceau d'électrons (sens de la flèche 61). Au bout de la durée $t_1$, les transistors commutateurs de courant $T_1$..., $T_j$..., $T_n$ sont progressivement bloqués par le circuit de commande 68 sur une durée $t_2 - t_1$ inférieure à une ou deux microsecondes afin de supprimer les courants auxiliaires partiels et d'obtenir une loi de variation de courant de forme analogue à celle représentée à la figure 6.

La figure 8 donne un exemple de circuit électrique d'alimentation en courant d'un onduleur ayant un circuit de magnétisation constitué d'un conducteur à méandres en deux parties 70, 71 tels que ceux représentés aux figures 4b, 4d, 4f ou 4h. Le faisceau d'électrons circule le long du conducteur à méandres entre ses deux parties 70, 71, depuis leur extrémité S jusqu'à leur extrémité E. en suivant le sens de la flèche 72. Les deux parties 70, 71 du conducteur à méandres sont pourvues de prises auxiliaires de dérivation de courant $P'_1$..., $P'_j$..., $P'_n$ et respectivement $P''_1$..., $P''_j$..., $P''_n$ échelonnées sur leur longueur. Elles sont alimentées en courant par un transformateur d'impulsions 73 avec un enroulement primaire 74 et un enroulement secondaire 75 à prise intermédiaire 76. La partie 70 du conducteur à méandres est connectée par son extrémité E à la prise intermédiaire 76 et par son extrémité S à une résistance 77 menant à l'extrémité E de l'autre partie 71 dont l'extrémité S est connectée à une borne d'extrémité 78 de l'enroulement secondaire 75 du transformateur d'impulsions 73. L'autre borne d'extrémité 79 de l'enroulement secondaire 75 du transformateur d'impulsions 73 est connectée par l'intermédiaire des jonctions collecteur-émetteur d'un groupe de transistors commutateurs de courant $T'_1$..., $T'_j$..., $T'_n$ aux prises auxiliaires de dérivation $P'_1$..., $P'_j$..., $P'_n$ de la partie 70 du conducteur à méandres tandis que les prises auxiliaires de dérivation $P''_1$..., $P''_j$..., $P''_n$ de l'autre partie 71 du conducteur à méandres sont connectées par l'intermédiaire des jonctions collecteur-émetteur d'un autre groupe de transistors commutateurs de courant $T''_1$..., $T''_j$..., $T''_n$ à l'extrémité S de la première partie 70 du conducteur à méandres. Les bases des transistors commutateurs de courant $T'_1$..., $T'_j$..., $T'_n$ et $T''_1$..., $T''_j$..., $T''_n$ des deux groupes sont connectées à un circuit de commande 80.

En cours de fonctionnement, le transformateur d'impulsions 73 reçoit sur son enroulement primaire 74 des impulsions d'excitation qui recouvrent chacune, avec une durée légèrement supérieure, une macroimpulsion coincidant à l'arrivée dans l'onduleur d'un paquet de bouffées d'électrons. Chaque impulsion d'excitation provoque l'apparition, sur la prise intermédiaire 76 de l'enroulement secondaire 75 du transformateur d'impulsions 73, d'un courant principal $I_0$ d'une intensité de quelques kiloampères à quelques dizaines de kiloampères qui circule sur toute la longueur de deux parties 70, 71 du conducteur à méandres, dans le même sens dans chacune des deux parties par rapport au cheminement du faisceau d'électrons. Elle provoque en outre, pendant un temps $t_1$ inférieure à une ou deux microsecondes où les deux groupes de transistors commutateurs de courant $T'_1$,.. $T'_j$, .. $T'_n$ et $T''_1$,... $T''_j$,..$T''_n$ sont rendus conducteurs par le circuit de commande 80, l'apparition de courants auxiliaires partiels $I_1$,..$I_j$,.. $I_n$ qui sont d'une part prélevés sur la borne d'extrémité 79 du secondaire 75 et injectés dans la partie 70 du conducteur à méandres au niveau des différentes prises auxiliaires de dérivation $P'_1$,..$P'_j$,..$P'_n$ et qui sont d'autre part prélevés en sortie de la partie 70 du conducteur à méandres pour être injectés dans l'autre partie 71 du conducteur à méandres au niveau des différentes prises auxiliaires de dérivation $P''_1$,..$P''_j$,..$P''_n$. La résistance 77 placée en tête de la partie 71 du conducteur à méandres compense les résistances à l'état passant des transistors $T''_1$,..$T''_j$,..$T''_n$ pour permettre l'extraction des courants partiels $I_1$, $I_j$, $I_n$ en sortie de la partie 70 du conducteur à méandres. Ainsi, les deux parties 70, 71 du conducteur à méandres sont parcourues par des courants identiques qui vont croissant lorsque l'on se déplace depuis leur extrémité E à leur extrémité S dans un sens inverse du sens 72 de cheminement du faisceau d'électrons. Au bout de la durée $t_1$, les deux groupes de transistors commutateurs de courant $T'_1$,.. $T'_j$,.. $T'_n$ et $T''_1$,..$T''_j$,..$T''_n$ sont progressivement bloqués sur une durée $t_2 - t_1$ inférieure à une ou deux microsecondes afin de supprimer les courants partiels et d'obtenir une loi de variation de courant de forme analogue à celle représentée à la figure 6.

La figure 9 donne un autre exemple d'un circuit électrique d'alimentation en courant pour un onduleur ayant un circuit de magnétisation constitué d'un conducteur à méandres en deux parties 85, 86. Le faisceau d'électrons circule le long du conducteur à méandres, entre ses deux parties 85, 86 depuis leur extrémité S jusqu'à leur extrémité E en suivant le sens de la flèche 87. Les deux parties 85, 86 du conducteur à méandres sont pourvues, comme précédemment, de prises auxiliaires de dérivation de courant $P'_1,.. P'_j,.. P'_n$ et respectivement $P''_1,..P''_j,..P''_n$ échelonnées sur leur longueur. Elles sont alimentées en courant par un transformateur d'impulsions 88 comportant un enroulement primaire 89 et un enroulement secondaire 90 à prise intermédiaire 91. La partie 85 du conducteur à méandres a son extrémité E connectée à la prise intermédiaire 91 et son extrémité S connectée à l'extrémité E de l'autre partie 86 dont l'autre extrémité S est connectée par l'intermédiaire d'une résistance 92 à une borne d'extrémité 93 de l'enroulement secondaire 90 du transformateur d'impulsion 88. L'autre borne d'extrémité 94 de l'enroulement secondaire 90 du transformateur d'impulsions 88 est connectée par l'intermédiaire des jonctions collecteur-émetteur de deux groupes de transistors commutateurs de courant $T'_1,..T'_j,..T'_n$ et $T''_1,..T''_j,..T''_n$ aux prises auxiliaires de dérivation de courant $P'_1,..P'_j,..P'_n$ et $P''_1,..P''_j,..P'_n$ de l'une et l'autre parties 85, 86 du conducteur à méandres. Un transistor commutateur de courant $T'''$ a sa jonction collecteur-émetteur connectée en série avec une résistance 95 entre l'extrémité S de la partie 85 du conducteur à méandres et la borne d'extrémité 93 de l'enroulement secondaire 90 du transformateur d'impulsions 88. Les bases des transistors commutateurs de courant $T'_1,..T'_j,..T'_n$ et $T''_1,..T''_j,..T''_n$ des deux groupes ainsi que celle du transistors $T'''$ sont connectées à un circuit de commande 96.

Comme dans les deux cas précédents, le transformateur d'impulsions 88 reçoit sur son enroulement primaire 89 des impulsions d'excitation qui recouvrent chacune, avec une durée légèrement supérieure, une macroimpulsion coïncidant avec l'arrivée dans l'onduleur d'un paquet de bouffées d'électrons. Chaque impulsion d'excitation provoque l'apparition, sur la prise intermédiaire 91 de l'enroulement secondaire 90 du transformateur de courant 88, d'un courant principal $I_o$ d'une intensité de quelques kiloampères à quelques dizaines de kiloampères qui circule sur toute la longueur des deux parties 85, 86 du conducteur à méandres, dans le même sens dans chacune des deux parties par rapport au cheminement du faisceau d'électrons. Elle provoque en outre, pendant un temps $t_1$ inférieure à une ou deux microsecondes où l'ensemble des transistors commutateurs de courant $T'_1,..T'_j,..T'_n$ et $T''_1,..T''_j,..T''_n$ et $T'''$ sont rendus conducteurs par le circuit de commande 96, l'apparition de courants auxiliaires, partiels $I_1,..I_j,..I_n$ prélevés sur la borne d'extrémité 94 de l'enroulement secondaire 90 qui sont d'une part injectés dans la partie 85 du conducteur à méandres au niveau des différentes prises auxiliaires de dérivation $P'_1,..P'_j,..P'_n$ et extraits en sortie de l'extrémité S par le transistor $T'''$, et d'autre part injectés dans la partie 86 du conducteur à méandres au niveau des différentes prises auxiliaires de dérivation $P''_1,..P''_j,..P''_n$. La résistance 92 placée à l'extrémité S de la partie 86 du conducteur à méandres compense la résistance à l'état passant du transistor $T'''$ assurant l'extraction des courants partiels $I_1,..I_j,..I_n$ en sortie de la partie 85 du conducteur à méandres pour que seul le courant principal $I_o$ pénètre par l'extrémité E de l'autre partie 86 du conducteur à méandres de façon que les deux parties 85 et 86 soient traversées par des courants identiques. La résistance 95 permet d'ajuster l'intensité du courant extrait entre les deux parties 85, 86 du conducteur à méandres par le transistor $T'''$, pour que cette dernière corresponde bien à celles des courants partiels. Ainsi, pendant la durée $t_1$, les deux partie 85, 86 du conducteur à méandres sont parcourues par des courants identiques dont l'intensité va croissante lorsque l'on se déplace depuis leur extrémité E à leur extrémité S dans un sens inverse du sens 87 de cheminement du faisceau d'électrons. Au bout de la durée $t_1$, les deux groupes de transistors commutateurs de courant $T'_1,.. T'_j,.. T'_n$ ; $T''_1,..T''_j,..T''_n$ et le transistor $T'''$ sont progressivement bloqués sur une durée $t_2 - t_1$ inférieure à une ou deux microsecondes afin de supprimer les courants auxiliaires partiels et d'obtenir dans les deux parties 85, 86 du conducteur à méandres une loi de variation de courant de forme analogue à celle représentée à la figure 6.

Les figures 10 et 11 illustrent un mode de réalisation d'une structure d'onduleur ayant un circuit de magnétisation formé drun conducteur à méandres en deux parties superposées 50, 51 assemblées électriquement en série comme dans la figure 5 et pourvues de prises auxiliaires de dérivation de courant échelonnées sur leur longueur.

Les deux parties superposées 50, 51 du conducteur à méandres sont séparées par des entretoises isolantes 100, 101 de façon à laisser entre elles un espace libre 102 pour la circulation du faisceau d'électrons. Elles sont maintenues en place par deux jeux de barres longitudinales non représentées, boulonnées entre elles qui les pincent par côté en appui sur les entretoises isolantes 100, 101.

On distingue de chaque côté des deux parties 50, 51 du conducteur à méandres, la barre conductrice 52 d'arrivée du courant principal $I_o$ fixée à la patte latérale 53 issue de la partie 50, la barre conductrice 55 d'interconnexion électrique qui vient dans le prolongement de la barre conductrice 52 d'arrivée de courant et qui est fixée entre la patte latérale 54 issue de la partie 50 et la patte latérale 56 issue de la partie 51, et la barre conductrice 58 de départ de courant disposée de l'autre côté des parties 50 et 51, et fixée à la patte latérale 57 issue de la partie 51.

L'ensemble des deux parties 50, 51 du conducteur à méandres, de leurs barres de maintien et d'interconnexion 52, 55, 58 ainsi que des tubulures de refroidissement non représentées pour ne pas surcharger les figures est disposé dans une boîte à vide présentant une paroi à section en U 103 fermée à sa base par un socle 104 et à ses extrémités par des couvercles.

Les deux parties 50 et 51 du conducteur à méandres, qui forment des méandres à contour rectangulaire en U comme représenté à la figure 4d, présentent, le long de l'un de leur côté tourné vers le bas de la boîte à vide, des prises de dérivation de courant électrique échelonnées tous les trois méandres. Ces prises de dérivation sont constituées chacune d'un morceau de tige métallique 105, 106 planté latéralement dans les parties 50, 51 du conducteur à méandres et raccordé par un fil de connexion 107, 108 à une traversée électrique isolante et étanche 109, 110, fixée dans le voisinage, au travers de la paroi 103 de la boîte à vide.

On remarque que les prises électriques de dérivation sur les parties 50, 51 du conducteur à méandres sont placées symétriquement par rapport au plan intercalaire qui est situé entre les deux parties 50, 51 du conducteur à méandres et dans lequel circule le faisceau d'électrons selon le sens de la flèche 111.

## Revendications

1. Procédé de réglage du champ magnétique transverse dans un onduleur pour la génération d'énergie lumineuse à partir d'un faisceau d'électrons émis en paquets isolés, un paquet ayant la durée d'une macroimpulsion, l'onduleur comportant un conducteur (60) formant le long du trajet du faisceau d'électrons, des bobinages ou des méandres induisant en tout ou partie un champ magnétique transverse alternativement polarisé Nord-Sud et Sud-Nord caractérisé en ce qu'il consiste :
   - à prévoir sur le conducteur induisant le champ magnétique transverse, des prises auxiliaires de dérivation de courant $(P_1,..P_j,..P_n)$ échelonnées le long du trajet du faisceau d'électrons dans l'onduleur ;
   - à injecter un courant principal d'excitation (Io) dans la totalité du conducteur induisant le champ magnétique transverse pendant la durée d'un macroimpulsion correspondant au temps de passage dans l'onduleur d'un paquet d'électrons et
   - à injecter, par les prises auxiliaires de dérivation $(P_1,..P_j,..P_n)$, au début de chaque macroimpulsion, des courants partiels $(I_j)$ qui s'ajoutent au courant principal d'excitation $(I_o)$ dans des parties du conducteur induisant un champ magnétique transverse dans des zones du trajet du faisceau d'électrons dans l'onduleur situées en amont desdites prises de dérivation $(P_1,..P_j,..P_n)$ par rapport au sens de circulation du faisceau.

2. Procédé selon la revendication 1, caractérisé en ce que les courants partiels $(I_j)$ injectés par les prises auxiliaires de dérivation $(P_1,..P_j,..P_n)$ sont maintenus constants pendant une première période de temps d'une macroimpulsion puis progressivement annulés au cours d'une deuxième période de temps d'une macroimpulsion.

3. Procédé selon la revendication 2, caractérisé en ce que ladite première période de temps dure quelques microsecondes.

4. Procédé selon la revendication 2, caractérisé en ce que ladite deuxième période de temps dure quelques microsecondes.

5. Onduleur pour la génération d'énergie lumineuse à partir d'un faisceau d'électrons émis en paquets isolés coincidant à des macroimpulsions, comportant un circuit de magnétisation comprenant un conducteur formant le long du trajet du faisceau d'électrons, des bobinages ou des méandres induisant un champ magnétique transverse alternativement polarisé Nord-Sud et Sud-Nord caractérisé en ce qu'il comporte en outre :
   - des prises auxiliaires de dérivation de courant $(P_1,..P_j,..P_n)$ échelonnées sur le conducteur induisant le champ magnétique transverse le long du trajet du faisceau d'électrons dans l'onduleur ;
   - des moyens pour injecter un courant principal d'excitation $(I_o)$ dans la totalité du conducteur induisant le champ magnétique transverse pendant la durée de chaque macroimpulsion correspondant au temps de passage dans l'onduleur d'un paquet d'électrons et
   - des moyens pour injecter, par les prises auxiliaires de dérivation $(P_1,..P_j,..P_n)$ au début de chaque macroimpulsion, des courants auxiliaires $(I_j)$ qui s'ajoutent au courant principal d'excitation $(I_o)$ dans des parties du conducteur induisant un champ magnétique transverse dans des zones du trajet du faisceau d'électrons dans l'onduleur situées en amont desdites prises de dérivation par rapport au sens de circulation du faisceau.

6. Onduleur selon la revendication 5, caractérisé en ce que les moyens pour injecter des courants auxiliaires (I$_j$) comportent des moyens de commutation (T, T', T'', T''') permettant d'interrompre progressivement les courants auxiliaires (I$_j$) un certain délai après le début de chaque macroimpulsion.

7. Onduleur selon la revendication 5, avec un circuit de magnétisation comportant un conducteur à méandres en deux parties (50, 51) superposées de part et d'autre du trajet du faisceau d'électrons caractérisé en ce qu'il comporte des prises auxiliaires de dérivation de courant (105, 106) échelonnées le long des deux parties (50, 51) du conducteur à méandres et disposées symétriquement par rapport à un plan intercalaire qui est situé entre les deux parties (50, 51) du conducteur à méandres et dans lequel circule le faisceau d'électrons.

**Patentansprüche**

1. Verfahren zur Einstellung des transversalen Magnetfelds in einem Undulator für die Erzeugung von Lichtenergie ausgehend von einem Strahl von in isolierten Paketen ausgesendeten Elektronen, wobei ein Paket die Dauer eines Makroimpulses besitzt und der Undulator einen Leiter (60) aufweist, der entlang der Bahn des Elektronenstrahls Windungen oder Mäander bildet, die insgesamt oder in einem Teil ein transversales Magnetfeld induzieren, das abwechselnd Nord-Süd und Süd-Nord polarisiert ist, dadurch gekennzeichnet, daß das Verfahren darin besteht,
   - auf dem das transversale Magnetfeld induzierenden Leiter Hilfsanschlüsse zur Stromableitung (P$_1$, ..., P$_j$, ..., P$_n$) vorzusehen, die entlang der Bahn des Elektronenstrahls im Undulator verteilt sind,
   - einen Hauptanregungsstrom (I$_o$) in den ganzen Leiter einzuspeisen, der das transversale Magnetfeld während der Dauer eines Makroimpulses entsprechend der Durchlaufzeit eines Elektronenpakets im Undulator induziert,
   - und über die Hilfsableitanschlüsse (P$_1$,..., P$_j$, ..., P$_n$) zu Beginn jedes Makroimpulses partielle Ströme (I$_j$) einzuspeisen, die sich dem Hauptanregungsstrom (I$_o$) in Teilen des Leiters überlagern und ein transversales Magnetfeld in Zonen der Elektronenstrahlbahn im Undulator induzieren, die sich vor den Ableitungsanschlüssen

(P1, ..., P$_j$, ..., P$_n$) bezüglich der Bewegungsrichtung der Elektronen des Strahls befinden.

2. Verfahren nach Anspruch 1, dadurch gekennzeichnet, daß die partiellen Ströme (I$_j$), die über die Hilfsableitanschlüsse (P$_1$, ..., P$_j$, ..., P$_n$) eingespeist werden, während einer ersten Zeitperiode eines Makroimpulses konstant gehalten werden und dann während einer zweiten Zeitperiode eines Makroimpulses zunehmend bis auf Null verringert werden.

3. Verfahren nach Anspruch 2, dadurch gekennzeichnet, daß die erste Zeitperiode einige Mikrosekunden andauert.

4. Verfahren nach Anspruch 2, dadurch gekennzeichnet, daß die zweite Zeitperiode einige Mikrosekunden andauert.

5. Undulator für die Erzeugung von Lichtenergie ausgehend von einem Strahl von Elektronen, die in isolierten und mit Makroimpulsen zusammenfallenden Paketen ausgesendet werden, mit einem Magnetkreis, der einen entlang der Bahn des Elektronenstrahls Windungen oder Mäander bildenden Leiter aufweist und ein transversales Magnetfeld induziert, welches abwechselnd Nord-Süd und Süd-Nord polarisiert ist, dadurch gekennzeichnet, daß er weiter aufweist:
   - Hilfsanschlüsse zur Stromableitung (P$_1$,..., P$_j$, ..., P$_n$), die über den Leiter verteilt sind, der das transversale Magnetfeld entlang der Elektronenstrahlbahn im Undulator induziert,
   - Mittel, um einen Hauptanregungsstrom (I$_o$) in den ganzen Leiter einzuspeisen, der das transversale Magnetfeld während der Dauer jedes Makroimpulses entsprechend der Durchlaufzeit eines Pakets von Elektronen durch den Undulator induziert, und
   - Mittel, um über die Hilfsableitanschlüsse (P$_1$, ..., P$_j$, ..., P$_n$) zu Beginn jedes Makroimpulses Hilfsströme (I$_j$) einzuspeisen, die sich dem Hauptanregungsstrom (I$_o$) in Teilen des Leiters überlagern und ein transversales Magnetfeld in Zonen der Elektronenstrahlbahn im Undulator induzieren, die sich bezüglich der Richtung der Bewegung der Elektronen vor den Ableitanschlüssen befinden.

6. Undulator nach Anspruch 5, dadurch gekennzeichnet, daß die Mittel zum Einspeisen der Hilfsströme (I$_j$) Schaltmittel (T, T', T'', T''') aufweisen, die die Hilfsströme (I$_j$) eine gewisse Zeit nach dem Beginn jedes Makroimpulses zunehmend sperren.

7. Undulator nach Anspruch 5, mit einem Magnetisierungskreis, der einen mäanderförmigen Leiter aus zwei Teilen (50, 51) besitzt, die zu beiden Seiten der Elektronenstrahlbahn liegen, dadurch gekennzeichnet, daß er Hilfsanschlüsse zur Stromableitung (105, 106) aufweist, die entlang der beiden Teile (50, 51) des mäanderförmigen Leiters verteilt sind und symmetrisch bezüglich einer Zwischenebene angeordnet sind, die zwischen den beiden Teilen (50, 51) des mäanderförmigen Leiters liegt und in der der Elektronenstrahl verläuft.

## Claims

1. Method of setting the transverse magnetic field in an undulator for generating light energy from a beam of electrons emitted in isolated packets, a packet having the duration of a macropulse, the undulator including a conductor (60) forming windings or zig-zags along the path of the electron beam, wholly or partly inducing a transverse magnetic field alternately polarized North-South and South-North, characterized in that it consists:
   - in providing, on the conductor inducing the transverse magnetic field, auxiliary current tapping connections $(P_1,..P_j..P_n)$ spaced out along the path of the electron beam in the undulator;
   - in injecting a main excitation current $(I_o)$ in the whole of the conductor inducing the transverse magnetic field for the duration of a macropulse corresponding to the transit time of a packet of electrons in the undulator and
   - in injecting, via the auxiliary tapping connections $(P_1,..P_j,..P_n)$, at the start of each macropulse, partial currents $(I_j)$ which are added to the main excitation current $(I_o)$ in parts of the conductor, inducing a transverse magnetic field in regions of the path of the electron beam in the undulator which are situated upstream of the said tapping connections $(P_1,..P_j,..P_n)$ with respect to the direction of flow of the beam.

2. Method according to Claim 1, characterized in that the partial currents $(I_j)$ injected by the auxiliary tapping connections $(P_1,..P_j,..P_n)$ are held constant for a first time period of a macropulse then progressively reduced to zero over a second time period of a macropulse .

3. Method according to Claim 2, characterized in that the said first time period lasts a few microseconds.

4. Method according to Claim 2, characterized in that the said second time period lasts a few microseconds.

5. Undulator for generating light energy from a beam of electrons emitted in isolated packets coinciding with macropulses, including a magnetization circuit comprising a conductor forming windings or zig-zags along the path of the electron beam, inducing a transverse magnetic field alternately polarized North-South and South-North, characterized in that it further includes:
   - auxiliary current tapping connections $(P_1,..P_j,.P_n)$ spaced out on the conductor inducing the transverse magnetic field along the path of the electron beam in the undulator;
   - means for injecting a main excitation current $(I_o)$ in the whole of the conductor inducing the transverse magnetic field for the duration of each macropulse corresponding to the transit time of a packet of electrons in the undulator and
   - means for injecting, via the auxiliary tapping connections $(P_1,..P_j,..P_n)$, at the start of each macropulse, auxiliary currents $(I_j)$ which are added to the main excitation current $(I_o)$ in parts of the conductor inducing a transverse magnetic field in regions of the path of the electron beam in the undulator which are situated upstream of the said tapping connections with respect to the direction of flow of the beam.

6. Undulator according to Claim 5, characterized in that the means for injecting auxiliary currents $(I_j)$ include switching means (T, T′, T″ , T‴) making it possible progressively to interrupt the auxiliary currents $(I_j)$ a certain time after the start of each macropulse.

7. Undulator according to Claim 5, with a magnetization circuit including a zig-zag conductor in two parts (50, 51) superimposed on either side of the path of the electron beam, characterized in that it includes auxiliary current tapping connections (105, 106) spaced out along the two parts (50, 51) of the zig-zag conductor and arranged symmetrically with respect to an interposed plane which is situated between the two parts (50, 51) of the zig-zag conductor, and in which the electron beam flows.

FIG.1

FIG.2

FIG.3

FIG.4a

FIG.4b

FIG.4c

FIG.4d

FIG.4e

FIG.4f

FIG.4g

FIG.4h

FIG.5

FIG.6

FIG.7

FIG.8

FIG.9

FIG.11

FIG.10